(19)

Europäisches Patentamt
European Patent Office
Office européen des brevets

(11) **EP 4 552 861 A1**

(12) **EUROPEAN PATENT APPLICATION**

(43) Date of publication:
**14.05.2025 Bulletin 2025/20**

(21) Application number: **23209436.7**

(22) Date of filing: **13.11.2023**

(51) International Patent Classification (IPC):
**B60C 11/03** *(2006.01)* **B60C 11/12** *(2006.01)*
**B60C 11/13** *(2006.01)*

(52) Cooperative Patent Classification (CPC):
**B60C 11/0318; B60C 11/0302; B60C 11/033;**
**B60C 11/0332; B60C 11/125; B60C 11/1259;**
**B60C 11/1369;** B60C 2011/1213; B60C 2011/1295;
B60C 2011/1361

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Bridgestone Europe NV/SA**
**1930 Zaventem (BE)**

(72) Inventors:
- **Rodriquez, Giuseppe**
  **00128 Roma (IT)**
- **Iannella, Silvia**
  **00128 Roma (IT)**

- **Amenta, Alessandro**
  **00128 Roma (IT)**
- **Sangiorgi, Emanuele**
  **00128 Roma (IT)**
- **Santangeli, Fabio**
  **00128 Roma (IT)**
- **Fortunato, Gaetano**
  **00128 Roma (IT)**
- **Emiliani, Marco**
  **00128 Roma (IT)**

(74) Representative: **Marchetti, Alessio**
**Bridgestone Europe NV/SA - Italian Branch**
**Technical Center**
**Via del Fosso del Salceto, 13/15**
**00128 Roma (IT)**

(54) **TIRE HAVING AN IMPROVED TREAD PATTERN**

(57) According to aspects of the invention, a tire for a vehicle comprising a tread is provided. The tread comprises a set of consecutive block patterns arranged along a circumference of the tire, each block pattern of the set of consecutive block patterns comprising a block and a first groove adjacent to the block. The set of consecutive block patterns comprises a first subset of $n_1$ first block patterns having a first pitch length, a second subset of $n_2$ second block patterns having a second pitch length greater than the first pitch length, and a third subset of $n_3$ third block patterns having a third pitch length greater than the second pitch length, wherein $n_1 \geq 10$,

$$1 \geq \frac{n_1}{n_2} \geq 0.50 \text{, and } 3 \geq \frac{n_2}{n_3} \geq 1.50.$$

Fig. 1

EP 4 552 861 A1

## Description

### Field of the invention

The present invention relates to a vehicle tire. One possible application of the disclosed tire relates to a winter tire intended to equip a passenger vehicle or commercial van vehicles. The disclosure can also be applied to other tires, for example all-season tires or tires for off the road applications.

### Background

Winter tires - which are used here as a typical example to facilitate readability - are known for providing good grip on snow covered road surfaces while also providing good performance on dry and wet road surfaces.

For example, winter tires are known that comprise grooves that extend from a center of the tire's tread, i.e., from the equatorial plane of the tire, towards a shoulder (sometimes also referred to as "shoulder portion" or "side portion") of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, braking and/or steering.

For tires which are intended to be used on various ground conditions, such as wet, dry and snow-covered grounds, there are several design parameters which have to be optimized to provide good performance for all ground conditions. In some cases, optimizing a design parameter for one type of road condition may include some performance loss for other conditions. Thus, there is a need of improvement in various design parameters, targeting at parameters which have synergistic effects.

Thus, it is an object of the present invention to provide a tire having improved performance on all types of road surfaces, such as wet, dry and snow-covered roads.

### Summary of the invention

This object is achieved by providing an improved vehicle tire according to the independent claim. Further embodiments are described in the dependent claims.

According to aspects of the invention, a tire for a vehicle comprising a tread is provided. The tread comprises a set of consecutive block patterns arranged along a circumference of the tire, each block pattern of the set of consecutive block patterns comprising a block and a first groove adjacent to the block. The set of consecutive block patterns comprises a first subset of $n_1$ first block patterns having a first pitch length, a second subset of $n_2$ second block patterns having a second pitch length greater than the first pitch length, and a third subset of $n_3$ third block patterns having a third pitch length greater than the second pitch length, wherein $n_1 \geq 10$, $1 \geq$

$$\frac{n_1}{n_2} \geq 0.50 \text{, and } 3 \geq \frac{n_2}{n_3} \geq 1.50 \text{.}$$

Such a tire provides for improved characteristics, in particular for winter tires on snow-covered grounds. Generally, two different mechanisms are responsible for traction on snow-covered and dry or wet grounds.

For snow traction, it is necessary for the edges of a tread profile to dig into a snow surface, in order to achieve a sufficient friction force between the tire and the ground to provide stability to a vehicle equipped with the tire. This can readily be achieved by providing blocks having relatively high flexibility which allows for deformation of the block under strain. The deformation of a block leads to enhanced edge efficiency, i.e., edges of the block can dig into a snow-covered surface more efficiently, thus increasing the tire's traction on such snow-covered surfaces, especially during driving maneuvers such as braking, accelerating and steering, but also lateral road holding may be improved.

Tire treads usually have block patterns with different pitch lengths, for example tire treads often have three different pitch lengths, such that a tread often has three subsets of block patterns, where each subset comprises block patterns of one specific pitch length. Commonly, tire treads contain a relatively low number of block patterns with a low pitch length.

In contrast, the tire according to the independent claim may include 10 or more block patterns of the smallest pitch length. The blocks of block patterns with a lower pitch length are generally more flexible, since a lower pitch length usually translates to a smaller width of the respective block measured in circumferential direction. A block with smaller width consequently deforms more readily upon strain. Therefore, a tread pattern containing more block patterns of the smallest pitch length contains more blocks with this increased flexibility, such that the performance of the tire on snow-covered surfaces is improved due to the above-described mechanism.

At the same time, for driving maneuvers on dry or wet grounds, the traction force between the tire and the road surface strongly depends on the surface area of rubber in contact with the road. This surface area can be increased by providing stiffer blocks, which then do not deform as readily under strain, such that a larger surface area of the rubber is in contact with the road. Thus, an increased flexibility of blocks, while increasing traction on snow, may at the same time impair the tire's performance on dry grounds by reducing the rubber surface in contact with the road during critical driving maneuvers such as braking, accelerating and steering.

Therefore, it is desired to also keep a number of blocks in block patterns with a larger pitch length and which are therefore stiffer than the blocks in the block patterns with low pitch length. Therefore, a trade-off between block patterns with low pitch length and higher pitch lengths needs to be made in order to achieve optimal performance on both snow-covered and dry or wet grounds.

It has been found that this can be most efficiently achieved by providing a ratio between the numbers of block patterns of the first and second pitch length, i.e. $\frac{n_1}{n_2}$, in the claimed range.

In some aspects of the invention, this ratio may fulfil one or more of the following inequalities: $\frac{n_1}{n_2} \geq 0.60$, preferably $\frac{n_1}{n_2} \geq 0.70$, more preferably $\frac{n_1}{n_2} \geq 0.80$, most preferably $0.90 \geq \frac{n_1}{n_2} \geq 0.85$. These ranges provide for optimal trade-off between performance on snow-covered road surfaces and dry or wet road surfaces.

In some aspects of the invention, the ratio between $n_2$ and $n_3$ may fulfil one or more of the following inequalities: $2.95 \geq \frac{n_2}{n_3} \geq 1.55$, preferably $2.9 \geq \frac{n_2}{n_3} \geq 1.55$, more preferably $2.85 \geq \frac{n_2}{n_3} \geq 1.6$. These ranges provide for optimal trade-off between performance on snow-covered road surfaces and dry or wet road surfaces.

In some aspects of the invention, one of the following inequalities may be fulfilled: $n_1 \geq 13$, preferably $n_1 \geq 15$, more preferably $n_1 \geq 17$. In other aspects of the invention, one of the following inequalities may be fulfilled: $n_1 \geq 20$, preferably $n_1 \geq 22$, more preferably $n_1 \geq 25$, even more preferably $n_1 \geq 27$. The number of block patterns in these ranges provide for optimal performance on snow-covered roads by providing a large number of block patterns with low pitch length.

In some aspects of the invention, the first pitch length may be between 22 and 27 mm, the second pitch length may between 27 and 33 mm, and the third pitch length may be between 32 and 39 mm. In other aspects of the invention, the first pitch length may be between 23 and 24 mm, the second pitch length may between 28 and 29 mm, and the third pitch length may be between 33.5 and 34.5 mm.

In some aspects of the invention, the total number of block patterns may be $(n_1 + n_2 + n_3) \geq 60$, preferably $(n_1 + n_2 + n_3) \geq 64$. In other aspects of the invention, the total number of block patterns may be $(n_1 + n_2 + n_3) \geq 70$, preferably $(n_1 + n_2 + n_3) \geq 72$. This comparatively large number of block patterns provides additional edges to the tread pattern, which enhances the tires performance on snow-covered surfaces.

In some aspects of the invention, if a ratio between a section width of the tire and an aspect ratio of the tire is between 2 mm and 5 mm, the tread tire may have a footprint width between 120 mm and 220 mm. In some aspects of the invention, if the ratio between the section width of the tire and the aspect ratio of the tire is between 5 mm and 8 mm, the tire may have a footprint width between 160 mm and 260 mm. In some aspects of the invention, if the ratio between the section width of the tire and the aspect ratio of the tire is between 8 mm and 12 mm, the tire may have a footprint width between 200 mm and 300 mm. This increased footprint width leads to a local stiffening of the blocks again as well as to an increased surface area of rubber in contact with the road, thus improving the tire's traction on dry and wet grounds, especially during braking and accelerating, but also during cornering maneuvers. Thus, while the increased amount of block patterns with low pitch length provides increased traction on snow-covered grounds, as discussed above, the traction on dry and wet grounds may be impaired. By providing the same pitch configuration in combination with the increased footprint width mitigates this problem, such that performance on both snow-covered and dry or wet ground can be improved. In other words, the snow performance can be improved without impairing the dry and wet performance.

In some aspects of the invention, the tread may have a skid depth $d_{Skid}$, wherein $7.0 \leq d_{Skid} \leq 9.0$, preferably $7.3 \leq d_{Skid} \leq 8.5$, more preferably $7.4 \leq d_{Skid} \leq 8.4$. In other aspects of the invention, the tread may have a skid depth $d_{Skid}$, wherein $8.0 \leq d_{Skid} \leq 8.6$, preferably $8.1 \leq d_{Skid} \leq 8.5$, more preferably $8.2 \leq d_{Skid} \leq 8.4$. This skid depth also provides local stiffening of the blocks as compared to a greater skid depth, because with this lower skid depth, the blocks do not protrude as far radially outwards. Thus, this local stiffening of the blocks also improves the tire's performance on dry and wet roads, leading to a good trade-off between snow-traction and dry/wet traction.

In some aspects of the invention, each block may comprise a plurality of first sipes, and each first sipe may have a sipe depth $d_{Sipe}$, wherein $0.76 \leq \frac{d_{Sipe}}{d_{Skid}} \leq 0.95$, preferably $0.77 \leq \frac{d_{Sipe}}{d_{Skid}} \leq 0.94$, more preferably $0.78 \leq \frac{d_{Sipe}}{d_{Skid}} \leq 0.93$. In other aspects of the invention, each first sipe may have a sipe depth $d_{Sipe}$, wherein $0.90 \leq \frac{d_{Sipe}}{d_{Skid}} \leq 0.95$, preferably $0.91 \leq \frac{d_{Sipe}}{d_{Skid}} \leq 0.94$, more preferably

$$0.92 \leq \frac{d_{Sipe}}{d_{Skid}} \leq 0.93.$$ This ratio between sipe depth and skid depth provides for sufficient flexibility on a block level, i.e., the flexibility of each individual block can be increased, leading to improved snow performance. This further improves the trade-off between snow-covered and dry/wet road surfaces. In other words, on a scale of the entire tire tread, the tread provides improved flexibility via the block patterns with small pitch length. On a smaller scale, each block pattern may be stiffened by increasing the footprint width and decreasing the skid depth. On an even smaller scale, each block individually may increase its flexibility again by means of the sipe-to-skid-depth-ratio. Thus, snow performance of the tire can be improved while at the same time enhancing traction on dry and wet road surfaces.

In some aspects of the invention, each block may comprise a first portion arranged at a central portion of the tire, and a second portion arranged in axial direction towards a shoulder of the tire with respect to the first portion. The first sipes may be arranged in at least one of the first portion and the second portion, and the at least one of the first portion and the second portion may comprise a primary area and a secondary area located axially outward with respect to the primary area. Then, a first distance between two neighboring first sipes in the primary area may be smaller than a second distance between two neighboring first sipes in the secondary area. In some aspects, the at least one of the first portion and the second portion may further comprises a tertiary area located axially outward with respect to the secondary area, and a third distance between two neighboring first sipes in the tertiary area may be smaller than the second distance between two neighboring first sipes in the secondary area. This further enhances traction on snow-covered roads, especially during braking, accelerating and steering, because by the increase in sipe density towards the edges of the block, the flexibility of the block is especially enhanced in those regions. By decreasing the distance between neighboring sipes near the outer areas of the block, e.g., near the leading and trailing edges, deformability of the block can be increased, leading to improved traction on snow, especially during braking and accelerating. By providing a higher distance between neighboring sipes in the central area of the block, in these regions the block is left less deformable, to still provide good traction on wet and dry grounds. Since the edges of the block are crucial for snow traction, it is especially advantageous to provide the lower distance between neighboring sipes especially near the edges of the block.

In some aspects of the invention, each block may be incised by at least one second groove. Each second groove may comprise a protrusion protruding radially outwardly from a bottom of the second groove. The protrusion may comprise a second sipe. The second sipe may substantially follow a shape of the second groove. A ratio between a height of the protrusion and a skid depth of the tire may be between 0.3 and 0.5 mm from a bottom of the tread. A width of the protrusion may match a width of the second groove. The second sipe may have a depth of between 40 and 70 % of a height of the protrusion.

The sipe allows for a local increase in flexibility of the block, while the protrusion limits said flexibility. Thus, the second groove with the protrusion - particularly in the described dimensions - also provides for good trade-off between flexibility and stiffness, and thus for good performance on both snow-covered and dry or wet ground.

In some aspects of the invention, a ratio between void surface and rubber surface in a central portion of the tread may be higher than the ratio between the void surface and the rubber surface in a portion of the tread axially outwards with respect to the central portion. In some aspects of the invention, the ratio between void surface and rubber surface in the central portion may be between 35.5 and 38.5.

In some aspects of the invention, the ratio between void surface and rubber surface in the portion of the tread axially outwards with respect to the central portion may be between 31.5 and 34.5.

A higher ratio between void and rubber translates to increased flexibility of the rubber parts. Thus, a void to rubber ratio in the described range provides for increased flexibility of the blocks at a central portion of the tire, while providing stiffer blocks at the shoulder of the tire. This further improves the balance between performance on snow-covered grounds and dry or wet grounds, especially in braking condition.

**Brief description of the drawings**

Fig. 1 illustrates a sketch of a vehicle tire according to the present invention.
Fig. 2 illustrates a tread pattern of a tire according to the present invention.
Fig. 3 illustrates two blocks of the tread pattern according to the present invention.
Fig. 4 illustrates a portion of the tread pattern, particularly the distances between neighboring sipes.
Fig. 5 illustrates a three-dimensional view of a block according to the present invention.

**Detailed description**

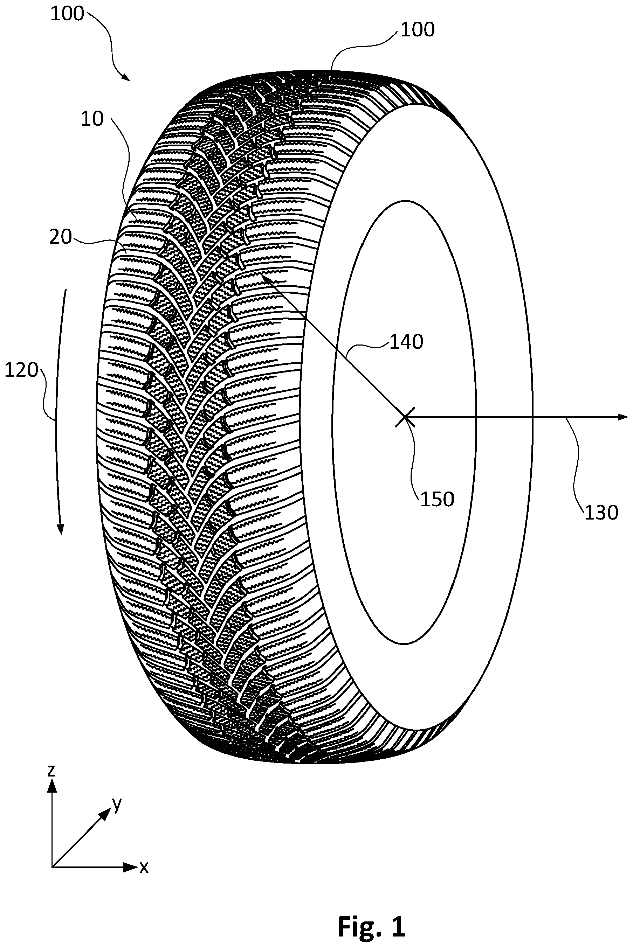

Fig. 1 shows a sketch of a vehicle tire according to the present disclosure.

According to Fig. 1, the tire 100 comprises a tread 110. The tread comprises a set of consecutive blocks 10 as well as grooves 20 arranged between two blocks 10 of the set of consecutive blocks. Moreover, a sipe may be arranged within each of the set of consecutive blocks 10.

The blocks may be arranged consecutively along a circumferential direction 120 of the tire.

A "groove" represents an incision in the tread pattern. A width of the groove may vary, for example, the first groove may be of larger width than the second groove, or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. The full tread depth is sometimes also denoted as the "skid depth". For example, a groove depth of least 1 mm, preferably at least 3 mm, is considered.

A "sipe" also represents an incision in the tread pattern. For example, the width of sipe may be smaller than the width of a groove, and may for example be less than 2 mm. Just as is the case for the groove, the width of a sipe does not have to be constant, and means can be applied to allow for a wider width towards the opening of the tread pattern, and a smaller width in radial inward direction. Also, a depth of a sipe may vary, and sometimes a sipe may extend at full depth, but this does not necessarily have to be the case. For example, a sipe depth of least 1 mm, preferably at least 20% of the skid depth is considered.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Within the context of the present disclosure, the "pitch length" means the length of a block pattern, i.e, a block and a first groove adjacent to the block, measured in the circumferential direction of the tire. For example, the "pitch length" may correspond to the arc length, measured alongside the circumference of the tire, between one point belonging to a pitch and a homologous point of a subsequent pitch. E.g., the pitch length may be the arc length between a point on a leading/trailing edge of one block and the corresponding point on the leading/trailing edge of the subsequent block.

Also, any numeral angles given herein are to be considered absolute values, i.e., not limiting to the orientation of the respective angle.

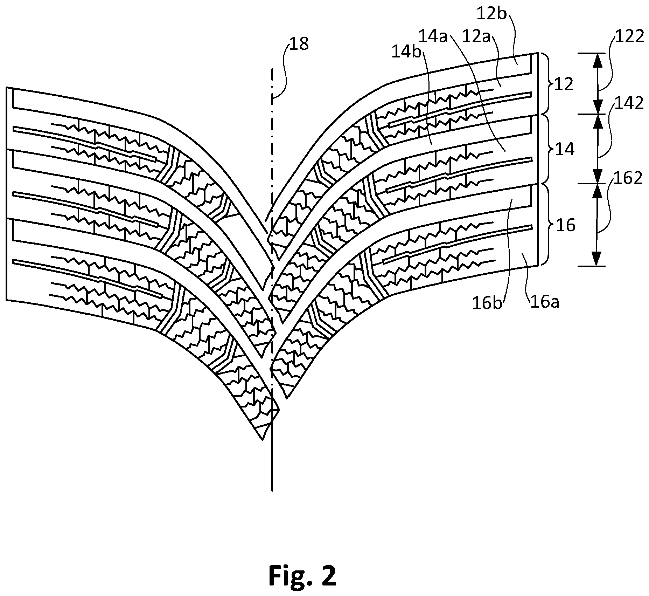

Fig. 2 illustrates a tread pattern of a tire according to the present invention. The tread pattern of Fig. 2 may for example be placed on the tread 110 of tire 100 according to Fig. 1.

According to Fig. 2, the tread may comprise a set of consecutive block patterns 12, 14, 16 arranged along a circumference of the tire, each block pattern of the set of consecutive block patterns comprising a block 12a, 14a, 16a and a first groove 12b, 14b, 16b adjacent to the block. Block patterns 12, 14, 16 may be arranged on both sides of equatorial plane 18 of the tire. In some cases, the width of both, the blocks 12a, 14a, 16a and the grooves 12b, 14b, 16b may be different for each pitch. In other examples, the width of only one of the blocks 12a, 14a, 16a and the grooves 12b, 14b, 16b may be different for each pitch, while the other of the blocks 12a, 14a, 16a and the grooves 12b, 14b, 16b may be the same for all pitches.

For example, the first block pattern 12 may comprise block 12a and groove 12b. The second block pattern 14 may comprise block 14a and groove 14b. The third block pattern 16 may comprise block 16a and groove 16b.

In some aspects of the invention, each block pattern of the set of consecutive block patterns may consist of a block and a first groove adjacent to the block.

In some embodiments, the tread may comprise blocks on both sides of the equatorial plane 18 of the tire. In some embodiments described elsewhere herein, these blocks may have axisymmetric configuration, such that the overall pattern is V-Shaped. In other embodiments described elsewhere herein, the blocks on both sides of the equatorial plane 18 may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane, it will be understood that the concept described herein can also be applied in asymmetric tread patterns, i.e., in patterns have substantially different tread configurations on both sides of the equatorial plane of the tire.

Generally, the blocks 12a, 14a, 16a of each block pattern 12, 14, 16 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, braking or steering.

According to Fig. 2, each block pattern 12, 14, 16 may further comprise a first groove 12b, 14b, 16b. Each of the first grooves may be arranged adjacent to a block 12a, 14a, 16a of the respective block pattern. Preferably, alternating blocks and first grooves may be placed over the entire circumference of the tire.

"Consecutive block patterns" within the context of this disclosure means that the tread comprises multiple block patterns following one another in succession over the circumference of the tire. While it is preferred that the invention according to the present disclosure is provided for all block patterns of the tire, it is possible that some individual block patterns, which may be arranged between other block patterns of the set of consecutive block patterns, are not arranged as described herein.

Although Fig. 2 illustrates a specific order in which block patterns may be arranged (i.e., a first block pattern 12, followed by a second block pattern 14, followed by a third block pattern 16), other orders of block patterns of the different subsets of block patterns are possible. The order of block patterns of different subsets of block patterns may vary over the circumference of the tire. If block patterns are arranged on both sides of the equatorial plane 18 of the tire, the order of the block patterns may be the same on both sides of the equatorial plane 18.

Preferably, the first grooves 12b, 14b, 16b may start near the equatorial plane 18 of the tire and extend towards a shoulder end of the tread to open at the outer edge of the tire. Each first groove 12b, 14b, 16b may be delimited by two adjacent blocks 12a, 14a, 16a, and more precisely by the two adjacent blocks' respective edges facing towards the first groove. For example, groove 14b may be delimited by block 12a and block 14a, and groove 16b may be delimited by block 14a and block 16a.

The purpose of the first grooves 12b, 14b, 16b is mainly the drainage of water from the contact patch by guiding the water along the first groove 12b, 14b, 16b towards the shoulder of the tire and eject the water from there, as the tire rolls on the ground. Thus, the first grooves 12b, 14b, 16b provide for improved performance of the tire, especially in wet road conditions. Further, as the first grooves 12b, 14b, 16b delimit the blocks 12a, 14a, 16a, they also provide edges for the blocks for improved snow performance. Moreover, the first grooves 12b, 14b, 16b allow for improved wear performance, as they allow more flexibility of the tread elements, such that slippage of the blocks 12a, 14a, 16a over the ground is reduced, leading to a decrease in the abrasion effects leading to wear.

In some aspects, the set of consecutive block patterns may comprise a first subset of $n_1$ first block patterns 12 having a first pitch length 122, a second subset of $n_2$ second block patterns 14 having a second pitch length 142 greater than the first pitch length 122, and a third subset of $n_3$ third block patterns 16 having a third pitch length 162 greater than the second pitch length 142.

In some aspects, the set of consecutive block patterns may consist of a first subset of $n_1$ first block patterns 12 having a first pitch length 122, a second subset of $n_2$ second block patterns 14 having a second pitch length 142 greater than the first pitch length 122, and a third subset of $n_3$ third block patterns 16 having a third pitch length 162 greater than the second pitch length 142.

In other words, the tread may comprise block patterns with three different pitch lengths, namely $n_1$ block patterns with the first, shortest pitch length, $n_2$ block patterns with the second, intermediate pitch length and $n_3$ block patterns with the third, largest pitch length.

Thus, in some aspects, the complete tire tread may consist of or comprise $(n_1 + n_2 + n_3)$ block patterns in total. In some aspects, the total number of block patterns maybe at least 60, i.e., $(n_1 + n_2 + n_3) \geq 60$. In some aspects, the total number of block patterns may be at least 64, i.e., $(n_1 + n_2 + n_3) \geq 64$. In other embodiments, the total number of block patterns may be at least 70, or at least 72, i.e., $(n_1 + n_2 + n_3) \geq 70$ or $(n_1 + n_2 + n_3) \geq 72$. A large number of block patterns directly translates to a large number of blocks. Thus, the large number of block patterns further provides an increased number of block edges. The block edges contribute to the friction force between the tire and the ground and especially allow for the tread to dig into snowy surfaces, leading to improved traction of the tire, especially on snow-covered roads.

In some aspects, the tread may comprise at least 10 block patterns of the first, shortest pitch length, i.e., $n_1 \geq 10$. In some preferred embodiments, the number of block patterns with the shortest pitch length may be higher, for example $n_1 \geq 13$, $n_1 \geq 15$, or $n_1 \geq 17$. In other embodiments, the number of block patterns with the shortest pitch length may be even higher, for example $n_1 \geq 20$, $n_1 \geq 22$, $n_1 \geq 25$, or $n_1 \geq 27$. As discussed in more detailed above, a great number of block patterns with low pitch length provides for a larger quantity of more flexible blocks. The blocks with improved flexibility provide for enhanced performance on snow-covered road surfaces. Therefore, increasing said number of block patterns with the shortest pitch length improves the overall snow performance of the tire.

In some aspects of the invention, the first pitch length may be between 23 and 24 mm, the second pitch length may be between 28 and 29 mm, and the third pitch length may be between 33.5 and 34.5 mm.

In some aspects of the invention, the ratio be-

tween the number $n_1$ of first block patterns and the number $n_2$ of second block patterns may be between 0.50 and 1, i.e.,

$$1 \geq \frac{n_1}{n_2} \geq 0.50$$

. In other words, the quantity of first block patterns may be at least half the number of second block patterns, and at most equal the number of second block patterns. In some aspects of the invention, the ratio between $n_1$ and $n_2$ may be at least 0.50, i.e.,

$$\frac{n_1}{n_2} \geq 0.50$$

. In some aspects of the invention, the ratio between $n_1$ and $n_2$ may be at least 0.55, i.e.,

$$\frac{n_1}{n_2} \geq 0.55$$

. In some aspects of the invention, the ratio between $n_1$ and $n_2$ maybe at least 0.70, i.e.,

$$\frac{n_1}{n_2} \geq 0.70$$

. In some aspects of the invention, the ratio between $n_1$ and $n_2$ may be at least 0.55 and at most 0.90, i.e.,

$$0.90 \geq \frac{n_1}{n_2} \geq 0.55$$

.

As discussed above, a higher number of block patterns with small pitch lengths may improve snow performance of the tire, while at the same time, the performance on dry and/or wet road surfaces may be impaired. Thus, especially for winter tires, it is desirable to provide a satisfactory tradeoff between snow and dry or wet performance. Such a tradeoff can be readily achieved by providing numbers of the first block patterns and second block patterns in the above-described ranges.

In some aspects of the invention, a ratio between the number $n_3$ of block patterns with the third, largest pitch length and the number $n_2$ of block patterns with the second pitch length may be between 1.50 and 3, i.e.,

$$3 \geq \frac{n_2}{n_3} \geq 1.50$$

. In some aspects of the invention, the ratio between $n_2$ and $n_3$ may be between 1.55 and 2.95, i.e., $2.95 \geq$

$$\frac{n_2}{n_3} \geq 1.55$$

. In some aspects, the ratio between $n_2$ and $n_3$ may be between 1.6 and 2.85, i.e.,

$$2.85 \geq \frac{n_2}{n_3} \geq 1.6$$

.

In some aspects of the invention, the number $n_3$ of block patterns with the third, largest pitch length may be lower or equal to the number $n_1$ of block patterns with the first, smallest pitch length, i.e., $n_3 \leq n_1$. The block patterns with the largest pitch length particularly contribute to the traction of the tire on dry and wet grounds, especially during braking and accelerating. Thus, a number of said block pattern in the above-defined range provides for a good trade-off between snow and dry/wet traction.

In some aspects of the invention, if a ratio between a section width of the tire and an aspect ratio of the tire is between 2 mm and 5 mm, the tread tire may have a footprint width between 120 mm and 220 mm. In some aspects of the invention, if the ratio between the section width of the tire and the aspect ratio of the tire is between 5 mm and 8 mm, the tire may have a footprint width between 160 mm and 260 mm. In some aspects of the invention, if the ratio between the section width of the tire and the aspect ratio of the tire is between 8 mm and 12 mm, the tire may have a footprint width between 200 mm and 300 mm.

The section width may correspond to the nominal width of the tire, measured in axial direction, and is usually given in millimeters. The section width may correspond to the widest extension of the tire in axial direction. The aspect ratio may correspond to the tire's height off the rim, measured in radial direction, divided by the section width, and is usually given in %. The tire's height off the rim corresponds to the radial extension of the tire parts radially outwards from the rim. Thus, an aspect ratio of 70 means that the ratio between the height off the rim and the section width equals 0.7.

To calculate the ratio between the section width and the aspect ratio, the section width in mm is divided by the aspect ratio in %. For example, for a tire having a section width of 255 mm and an aspect ratio of 70, the ratio between the section width and the aspect ratio is equal to 255 mm / 70 ≈ 3.6 mm.

The procedure for measuring a tire footprint according to the present disclosure is described elsewhere herein. The footprint width may be measured in axial direction at the widest axial extension of the footprint.

This increased footprint width leads to a local stiffening of the blocks again, thus improving the tire's traction on dry and wet grounds, especially during braking and accelerating. Thus, while the increased amount of block patterns with low pitch length provides increased traction on snow-covered grounds, as discussed above, the traction on dry and wet grounds may be impaired. By providing the same pitch configuration in combination with the increased footprint width mitigates this problem, such that performance on both snow-covered and dry or wet ground can be improved. In other words, the snow performance can be improved without impairing the dry and wet performance.

In some aspects, the tread may have a skid depth $d_{Skid}$, wherein $7.0 \leq d_{Skid} \leq 9.0$, preferably $7.3 \leq d_{Skid} \leq 8.5$, more preferably $7.4 \leq d_{Skid} \leq 8.4$. In other embodiments, the tread may have a skid depth $d_{Skid}$, wherein $8.0 \leq d_{Skid} \leq 8.6$, preferably $8.1 \leq d_{Skid} \leq 8.5$, more preferably $8.2 \leq d_{Skid} \leq 8.4$.

The skid depth may be the maximum distance between the radially outermost part of the tire to the bottom of the deepest incision (e.g., groove or sipe), measured in radial direction.

Smaller skid depths generally lead to increased stability of the individual blocks, because due to the smaller radial extension of the block, the flexibility decreases. Thus, a lower skid depth provides for stiffer blocks and thus for enhanced performance on dry and wet grounds. However, a skid depth which is too low may impair the water ejection capacity because the cross-sectional area of the first grooves drops. Moreover, with the increased stiffness of the blocks, the performance on snow-covered roads may be impaired. Thus, also for the skid depth a trade-off between the properties is necessary, which is present especially for the above-described ranges.

The increased footprint width and lowered skid depth particularly provide for enhanced performance of the tire on dry and wet grounds. Thus, while the block pattern arrangements as discussed above improve snow traction and at the same time may impair dry and wet performance, the disadvantages can be mitigated by adapting the footprint width and/or the skid depth as discussed above. This way, both snow and dry/wet performance of the tire can be increased.

In some aspects of the invention, a ratio between void surface and rubber surface in a central portion of the tread may be higher than the ratio between the void surface and the rubber surface in a portion of the tread axially outwards with respect to the central portion.

The ratio between void surface and rubber surface may be measured in footprint condition. The measurement of a tire footprint is described elsewhere herein. The rubber surface $A_{rubber}$ may be obtained by measuring the surface area of all rubber parts in contact with the ground during the footprint measurement. The void surface $A_{void}$ may then be calculated as the difference between the total surface $A_{total}$ and the rubber surface $A_{rubber}$, such that $A_{void} = A_{total} - A_{rubber}$.

If the ratio between void surface in a specific portion of the tire is to be evaluated, the rubber surface $A_{rubber}$ may be obtained similarly by measuring the surface area of all rubber parts in contact with the ground in the specific portion. The void surface can then be obtained by $A_{void} = A_{portion} - A_{rubber}$, with $A_{portion}$ being the total surface area of the specific portion.

In some aspects of the invention, the central portion of the tread may make up 30% of the footprint width in axial direction.

In some aspects of the invention, the ratio between void surface and rubber surface in the central portion may be between 35.5 and 38.5.

In some aspects of the invention, the ratio between void surface and rubber surface in the portion of the tread axially outwards with respect to the central portion may be between 31.5 and 34.5.

In some aspects of the invention, the ratio between void surface and rubber surface may vary continuously from a central portion of the tire towards the portions of the tread axially outwards with respect to the central portion.

The higher ratio between void surface and rubber surface in the central portion leads to a local increase in flexibility of the blocks, thus achieving improved traction of the tire on snow-covered roads.

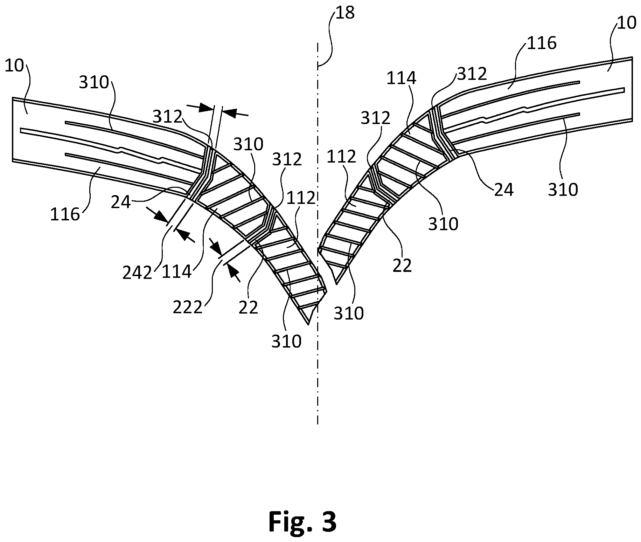

Fig. 3 illustrates two blocks of the tread pattern according to the present invention. The blocks of Fig. 3 may correspond to the blocks 10 of block patterns 12, 14 or 16 of any one of the first, second or third subset of block patterns.

According to Fig. 3, each of the blocks 10 may comprise a first portion 112 arranged at a central portion of the tire. The central portion of the tire may be the portion which is closest to or adjacent to the equatorial plane 18 of the tire. Moreover, according to Fig. 3, each of the blocks 10 may comprise a second portion 114, which may be arranged in axial direction towards a shoulder of the tire with respect to the first portion 112, and immediately next to first portion. Additionally, according to Fig. 3, each of the blocks 10 may comprise a third portion 116, which may be arranged in axial direction towards a shoulder of the tire with respect to the second portion 114, and immediately next to second portion 114. The first portion 112 may be denoted as "central portion". The second portion 114 may be denoted as "intermediate portion". The third portion 116 may be denoted as "shoulder portion".

According to Fig. 3, the first portion 112, the second portion 114 and the third portion 116 may be separated by second grooves 22, 24. However, in some aspects, the first portion 112, the second portion 114 and the third portion 116 may also be formed continuously, meaning that there may be no complete disruption between the three portions 112, 114, 116. Instead, they may be formed as one continuous arrangement. According to Fig. 3, each block 10 may comprise a plurality of first sipes 310. As illustrated in Fig. 3, the first sipes 310 may be arranged in all three portions of the block. However, in other embodiments, the first sipes 310 may be arranged only in some of the block portions and not in others. Although the first sipes 310 according to Fig. 3 are shaped as straight lines, they may as well have other shapes, for example zig-zag shapes, as illustrated in Fig. 2. Sipes are capable of trapping snow therein, such that, once snow is trapped, the friction coefficient between the tire and a snow-covered road surface can be increased. Moreover, each sipe may provide an additional edge to the tread. This improves traction on snow-covered grounds.

The density of the first sipes 310 may vary over an axial extension of each block portion 112, 114, 116. In other words, the distance between two neighboring first sipes 310 may vary over an axial extension of each block portion 112, 114, 116. The measurement of the distance between neighboring first sipes is described elsewhere herein.

The block 10 of Fig. 3 may correspond to any one of blocks 12a, 14a, 16a of Fig. 2.

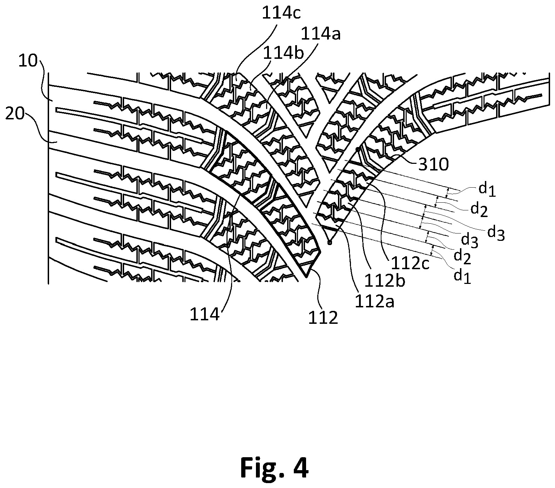

The distance between neighboring first sipes 310 may be constant within a portion of the block. However, in other embodiments, as for example illustrated in Fig. 4, the distance between neighboring first sipes 310 may also vary, for example continuously, over the axial extension of each block portion 112, 114, 116. Preferably, the distance between neighboring first sipes 310 may be lowest near the equatorial plane 18 of the tire and may increase along the axial extension of the block in a direction axially outwards towards the second portion 114 of the block 10. In some aspects, the distance between neighboring first sipes 310 may be low near the shoulder of the tire, i.e., in the third portion 116 of block 10, and may increase along the axial extension of the block in a direction axially inwards towards the second portion 114 of the block 10.

As illustrated in Fig. 3, each block 10 may be incised by one or more second grooves 22, 24. Each second groove 22, 24 may comprise a protrusion protruding radially outwardly from a bottom of the second groove 22, 24. In some aspects, the protrusion may match a width of the second groove 22, 24. The width 222, 242 may be measured perpendicular to the direction of extension of the second groove 22, 24. Thus, the protrusion may reach from one edge of the second groove 22, 24 to an opposing edge of the second groove 22, 24.

The protrusion may comprise a second sipe 312. The second sipe 312 may substantially follow a shape of the second groove 22, 24. That is, an angle between a second sipe and at least one edge of the respective second groove 22, 24 may be lower or equal to 10°, preferably lower or equal to 5°.

Fig. 4 illustrates a portion of the tread pattern, particularly the distances between neighboring sipes.

According to Fig. 4, each block 10 may comprise a first portion 112 arranged near or at a central portion of the tire and a second portion 114 arranged in axial direction towards a shoulder of the tire with respect to the first portion.

The first sipes 310 may be arranged in at least one of the first portion and the second portion, and the at least one of the first portion 112 and the second portion 114 may comprise a primary area 112a, 114a and a secondary area 112b, 114b located axially outward with respect to the primary area 112a, 114a. In some aspects of the invention, the at least one of the first portion 112 and the second portion 114 may further comprise a tertiary area 112c, 114c located axially outward with respect to the secondary area 112b, 114b.

In some aspects of the invention, a primary, secondary or tertiary area may be delimited by sipes. However, a primary, secondary or tertiary area may also be delimited in other ways, such as by grooves, by change in angle of block edges, or the like.

In some aspects of the invention, a first distance $d_1$ between two neighboring first sipes 310 in the primary area 112a may be smaller than a second distance $d_2$ between two neighboring first sipes 310 in the secondary area 112b. In some aspects of the invention, a third distance $d_3$ between two neighboring first sipes 310 in the tertiary area 112c may be smaller than the second distance $d_2$ between two neighboring first sipes 310 in the secondary area 112b.

Two areas, e.g. a primary area 112a, 114a and a secondary area 112b, 114b may be adjacent to each other. If the areas are delimited by first sipes, the first sipe located between the primary area 112a, 114a and the secondary area 112b, 114b may be part of both the primary area 112a, 114a and the secondary area 112b, 114b. Thus, three first sipes may comprise two separate pairs of neighboring first sipes in two areas.

The distances $d_1$, $d_2$, $d_3$ between neighboring first sipes 310 may be measured by neglecting potential zig-zag or other shapes of the individual first sipes 310. Thus, to measure the distance between neighboring first sipes, a straight line may be generated for each first sipe by connecting two end points of each first sipe. The distance between the so generated lines may then be measured perpendicularly to these lines. The distance between the two neighboring first sipes may then be equal to the distance between said lines.

The high density of first sipes towards the edges of the block 10 further enhances the traction of the tire on snow by improving the edge efficiency of the block 10. That is, by decreasing the distance between neighboring sipes near the edges of the block, deformability of the block can be increased near these edges, leading to improved traction on snow, especially during braking and accelerating. By providing a higher distance between neighboring sipes in the central area of the block, in these regions the block is left less deformable, to still provide good traction on wet and dry grounds. Since the edges of the block are crucial for snow traction, it is especially advantageous to provide the lower distance between neighboring sipes especially near the edges of the block.

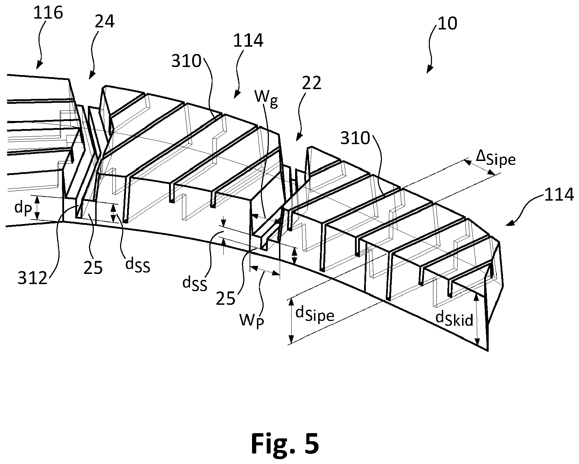

Fig. 5 illustrates a three-dimensional view of a block 10 according to the present invention. The block 10 of Fig. 5 may correspond to a block 10 as described in any of the preceding Figs.

Similar to the block 10 of Figs. 3 or 4, the block 10 as illustrated in Fig. 5 may also comprise a first portion 112, a second portion 114 and a third portion 116. As illustrated in Fig. 5, the block 10 may also comprise first sipes 310. The distance $\Delta_{Sipe}$ between neighboring first sipes 310 may vary along the axial extension of the block 10 as described with respect to Figs. 3 and 4. Although the first sipes 310 according to Fig. 5 are illustrated as straight lines, it will be understood that they may have other shapes as well, as for example the zig zag shapes as illustrated in some of the preceding Figs.

As illustrated in Fig. 5, the tread may have a skid depth $d_{Skid}$, wherein $7.0\text{ mm} \leq d_{Skid} \leq 9.0\ mm$, preferably $7.3\text{ mm} \leq d_{Skid} \leq 8.5\ mm$, more preferably $7.4\text{ mm} \leq d_{Skid} \leq 8.4\ mm$. In other embodiments of the invention, the tread may have a skid depth $d_{Skid}$, wherein $8.0 \leq d_{Skid} \leq 8.6$, preferably $8.1 \leq d_{Skid} \leq 8.5$, more preferably $8.2 \leq d_{Skid} \leq 8.4$.

As further illustrated in Fig. 5, each first sipe may have a sipe depth $d_{Sipe}$, wherein

$$0.76 \leq \frac{d_{Sipe}}{d_{Skid}} \leq 0.95$$

,     preferably

$$0.77 \leq \frac{d_{Sipe}}{d_{Skid}} \leq 0.94$$ , more preferably

$$0.78 \leq \frac{d_{Sipe}}{d_{Skid}} \leq 0.93$$ . In other aspects of the invention, each first sipe may have a sipe $d_{Skid}$ depth $d_{Sipe}$,

wherein $$0.90 \leq \frac{d_{Sipe}}{d_{Skid}} \leq 0.95$$ , preferably

$$0.91 \leq \frac{d_{Sipe}}{d_{Skid}} \leq 0.94$$ , more preferably

$$0.92 \leq \frac{d_{Sipe}}{d_{Skid}} \leq 0.93$$ .

As further illustrated by Fig. 5, each block 10 may be incised by at least one second groove 22, 24. Each second groove 22, 24 may comprise a protrusion 25 protruding radially outwardly from a bottom of the second groove 22, 24. In some aspects, the protrusion 25 may have a height $d_p$. A ratio between the height $d_p$ of the protrusion 25 and the skid depth $d_{Skid}$ may be between 0.3 and 0.5, i.e., $$0.3 \leq \frac{d_p}{d_{Skid}} \leq 0.5$$ .

In some aspects of the invention, the protrusion 25 may comprise a second sipe 312. The second sipe 312 may have a depth $d_{SS}$, measured from the radially outwardmost point of the protrusion 25. The depth $d_{SS}$ of the second sipe 312 may be between 40 and 70 % of the height $d_p$ of the protrusion 25.

In some aspects of the invention, the width $w_p$ of the protrusion 25 may match the width $w_g$ of the second groove 22, 24.

Numeral values, especially regarding the measurements of skid depths, sipe depths, etc. given in the present disclosure refer to measurements conducted on new tires, which have not been exposed to wear prior to the measurements.

Within the context of this disclosure, value ranges defined by border values are meant to encompass said border values. In other words, a value range given as "between a and b" is meant to encompass the values a and b.

**Tire footprint measurement**

Within the context of this disclosure, a "tire footprint" means all parts of the tire that come into contact with the ground when the tire is in inflated and loaded condition. The tire footprint gives information about the behavior of a tread profile in normal condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of 195 mm and below, a tire pressure of 1.9 bar is used. For a standard radial passenger tire with nominal section widths of 205 mm and above, a tire pressure of 2.0 bar is used. For reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

**Claims**

1. A tire for a vehicle comprising a tread, the tread comprising:

    a set of consecutive block patterns arranged along a circumference of the tire, each block pattern of the set of consecutive block patterns comprising a block and a first groove adjacent to the block;
    the set of consecutive block patterns comprising a first subset of $n_1$ first block patterns having a first pitch length, a second subset of $n_2$ second block patterns having a second pitch length greater than the first pitch length, and a third subset of $n_3$ third block patterns having a third pitch length greater than the second pitch length,
    wherein:

    •

    $$n_1 \geq 10,$$

    •

    $$1 \geq \frac{n_1}{n_2} \geq 0.50,$$

    and
    •

$$3 \geq \frac{n_2}{n_3} \geq 1.50.$$

2. The tire of claim 1, wherein $\frac{n_1}{n_2} \geq 0.50$ , preferably $\frac{n_1}{n_2} \geq 0.55$ , most preferably $0.90 \geq \frac{n_1}{n_2} \geq 0.55$ .

3. The tire of any one of the preceding claims, wherein $2.95 \geq \frac{n_2}{n_3} \geq 1.55$ , preferably $2.9 \geq \frac{n_2}{n_3} \geq 1.55$ , more preferably $2.85 \geq \frac{n_2}{n_3} \geq 1.6$ .

4. The tire of any one of the preceding claims, wherein $n_1 \geq 13$, preferably $n_1 \geq 15$, more preferably $n_1 \geq 17$.

5. The tire of any one of the preceding claims, wherein the first pitch length is between 22 and 27 mm, the second pitch length is between 27 and 33 mm, and the third pitch length is between 32 and 39 mm.

6. The tire of any one of the preceding claims, wherein $(n_1 + n_2 + n_3) \geq 60$, preferably $(n_1 + n_2 + n_3) \geq 64$.

7. The tire of any one of the preceding claims, wherein, if a ratio between a section width of the tire and an aspect ratio of the tire is between 2 mm and 5 mm, the tire has a footprint width between 120 mm and 220 mm, and

   wherein, if the ratio between the section width of the tire and the aspect ratio of the tire is between 5 mm and 8 mm, the tire has a footprint width between 160 mm and 260 mm, and
   wherein, if the ratio between the section width of the tire and the aspect ratio of the tire is between 8 mm and 12 mm, the tire has a footprint width between 200 mm and 300 mm.

8. The tire of any one of the preceding claims, wherein the tread has a skid depth $d_{Skid}$, wherein 7.0 mm $\leq d_{Skid} \leq 9.0$ mm, preferably 7.3 mm $\leq d_{Skid} \leq 8.5$ mm, more preferably 7.4 mm $\leq d_{Skid} \leq 8.4$ mm.

9. The tire of any one of the preceding claims, wherein the tread has a skid depth $d_{Skid}$, and wherein each block comprises a plurality of first sipes, each first sipe having a sipe depth $d_{Sipe}$, wherein $0.76 \leq \frac{d_{Sipe}}{d_{Skid}} \leq 0.95$ , preferably $0.77 \leq \frac{d_{Sipe}}{d_{Skid}} \leq 0.94$ , more preferably $0.78 \leq \frac{d_{Sipe}}{d_{Skid}} \leq 0.93$ .

10. The tire of claim 9, wherein each block comprises:

    a first portion arranged at a central portion of the tire; and
    a second portion arranged in axial direction towards a shoulder of the tire with respect to the first portion,
    wherein the first sipes are arranged in at least one of the first portion and the second portion, and the at least one of the first portion and the second portion comprises a primary area and a secondary area located axially outward with respect to the primary area, such that:
    a first distance between two neighboring first sipes in the primary area is smaller than a second distance between two neighboring first sipes in the secondary area.

11. The tire of claim 10, wherein the at least one of the first portion and the second portion further comprises a tertiary area located axially outward with respect to the secondary area, and wherein a third distance between two neighboring first sipes in the tertiary area is smaller than the second distance between two neighboring first sipes in the secondary area.

12. The tire of any one of the preceding claims, wherein the block of each block pattern is incised by at least one second groove, each second groove comprising a protrusion protruding radially outwardly from a bottom of the second groove, the protrusion comprising a second sipe.

13. The tire of claim 12, wherein the second sipe substantially follows a shape of the second groove.

14. The tire of any one of claims 12 to 13, wherein a ratio between a height of the protrusion and a skid depth of the tire is between 0.3 and 0.5.

15. The tire of any one of claims 12 to 14, wherein a width of the protrusion matches a width of the second groove.

16. The tire of any one of claims 12 to 15, wherein the second sipe has a depth of between 40 and 70 % of a height of the protrusion.

17. The tire of any one of the preceding claims, wherein a ratio between void surface and rubber surface in a central portion of the tread is higher than the ratio between the void surface and the rubber surface in a portion of the tread axially outwards with respect to the central portion.

18. The tire of claim 17, wherein the ratio between void surface and rubber surface in the central portion is between 35.5 and 38.5.

19. The tire of claim 17 or 18, wherein the ratio between void surface and rubber surface in the portion of the tread axially outwards with respect to the central portion is between 31.5 and 34.5.

100

100

10

20

120

140

150

130

z

y

x

**Fig. 1**

**Fig. 2**

**Fig. 3**

**Fig. 4**

**Fig. 5**

Europäisches
Patentamt

European
Patent Office

Office européen
des brevets

# EUROPEAN SEARCH REPORT

Application Number

EP 23 20 9436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 542 493 A1 (GEN TIRE INC [US]) 19 May 1993 (1993-05-19) | 1-4,6,8 | INV. B60C11/03 |
| Y | * page 4, lines 33-53; claims 1-14; figures 1,2 * | 5,7,9-19 | B60C11/12 B60C11/13 |
| X | US 2019/023078 A1 (KUNG LIN E [KR]) 24 January 2019 (2019-01-24) | 1-4,8 | |
| Y | * paragraphs [0021] - [0031], [0038]; claims 1-20; figures 1-7 * | 5,7,9-19 | |
| Y | WO 2017/092902 A1 (CONTINENTAL REIFEN DEUTSCHLAND GMBH [DE]) 8 June 2017 (2017-06-08) * page 3, lines 1-3; figure 1 * | 5 | |
| Y | US 2014/345764 A1 (BOURGEOIS FRÉDÉRIC [FR] ET AL) 27 November 2014 (2014-11-27) * paragraphs [0065], [0071]; claims 1-5; figures 1-6 * | 7 | |
| Y | WO 2022/043508 A1 (APOLLO TYRES GLOBAL R & D BV [NL]) 3 March 2022 (2022-03-03) * page 27 * | 9 | TECHNICAL FIELDS SEARCHED (IPC) B60C |
| Y | WO 2020/102056 A1 (MICHELIN & CIE [FR]; KEEFE BRIAN JOSEPH [US] ET AL.) 22 May 2020 (2020-05-22) * paragraph [0036]; claims 1-15; figures 1-11 * | 10,11 | |
| Y | WO 2018/103924 A1 (CONTINENTAL REIFEN DEUTSCHLAND GMBH [DE]) 14 June 2018 (2018-06-14) * page 5, lines 12-21; figures 1,2 * | 12-16 | |
| Y | EP 0 064 934 A2 (GOODYEAR TIRE & RUBBER [US]) 17 November 1982 (1982-11-17) * page 6, lines 2-30; figures 1,2 * | 17-19 | |

The present search report has been drawn up for all claims

| Place of search | Date of completion of the search | Examiner |
|---|---|---|
| Munich | 18 March 2024 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 9436

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2024

| Patent document cited in search report | | | Publication date | Patent family member(s) | | | Publication date |
|---|---|---|---|---|---|---|---|
| EP 0542493 | A1 | | 19-05-1993 | CA | 2076315 | A1 | 15-05-1993 |
| | | | | DE | 69213659 | T2 | 23-01-1997 |
| | | | | EP | 0542493 | A1 | 19-05-1993 |
| | | | | ES | 2093214 | T3 | 16-12-1996 |
| | | | | JP | 2725962 | B2 | 11-03-1998 |
| | | | | JP | H05213009 | A | 24-08-1993 |
| | | | | KR | 930009910 | A | 21-06-1993 |
| | | | | US | 5314551 | A | 24-05-1994 |
| US 2019023078 | A1 | | 24-01-2019 | NONE | | | |
| WO 2017092902 | A1 | | 08-06-2017 | DE | 102015224286 | A1 | 08-06-2017 |
| | | | | EP | 3383672 | A1 | 10-10-2018 |
| | | | | WO | 2017092902 | A1 | 08-06-2017 |
| US 2014345764 | A1 | | 27-11-2014 | BR | 112014012991 | A2 | 13-06-2017 |
| | | | | CN | 103974838 | A | 06-08-2014 |
| | | | | EP | 2788205 | A1 | 15-10-2014 |
| | | | | FR | 2983780 | A1 | 14-06-2013 |
| | | | | JP | 6286360 | B2 | 28-02-2018 |
| | | | | JP | 2015500166 | A | 05-01-2015 |
| | | | | RU | 2014127671 | A | 27-01-2016 |
| | | | | US | 2014345764 | A1 | 27-11-2014 |
| | | | | WO | 2013083429 | A1 | 13-06-2013 |
| WO 2022043508 | A1 | | 03-03-2022 | EP | 4204200 | A1 | 05-07-2023 |
| | | | | US | 2024025212 | A1 | 25-01-2024 |
| | | | | WO | 2022043508 | A1 | 03-03-2022 |
| WO 2020102056 | A1 | | 22-05-2020 | NONE | | | |
| WO 2018103924 | A1 | | 14-06-2018 | DE | 102016224366 | A1 | 07-06-2018 |
| | | | | EP | 3551476 | A1 | 16-10-2019 |
| | | | | WO | 2018103924 | A1 | 14-06-2018 |
| EP 0064934 | A2 | | 17-11-1982 | CA | 1170963 | A | 17-07-1984 |
| | | | | EP | 0064934 | A2 | 17-11-1982 |
| | | | | JP | S57194106 | A | 29-11-1982 |
| | | | | US | 4456046 | A | 26-06-1984 |

EPO FORM P0459

For more details about this annex : see Official Journal of the European Patent Office, No. 12/82